# EUROPÄISCHE PATENTSCHRIFT

(11) **EP 1 867 155 B1**
(45) Veröffentlichungstag und Bekanntmachung des Hinweises auf die Patenterteilung: **09.09.2015**
(21) Anmeldenummer: 06725344.3
(22) Anmeldetag: 28.03.2006
(51) Int. Cl.: H04N 5/76, H04N 5/782, H04N 5/445

(54) **VERFAHREN UND ANORDNUNG ZUM SPEICHERN UND WIEDERGEBEN VON TV-SENDUNGEN**
METHOD AND ARRANGEMENT FOR STORING AND PLAYING BACK TV PROGRAMMES
PROCEDE ET DISPOSITIF POUR ENREGISTRER ET REPRODUIRE DES EMISSIONS DE TELEVISION

(30) Priorität: 30.03.2005 US 666392 P
(43) Veröffentlichungstag der Anmeldung: 19.12.2007
(73) Patentinhaber: Nokia Solutions and Networks GmbH & Co. KG, 81541 Munich (DE)
(72) Erfinder: JENZOWSKY, Stefan, 14167 Berlin (DE); SCHEUER, Axel, 80804 München (DE); STELZL, Rudolf, 85221 Dachau (DE); SCHWEICKHARDT, Harald, 81479 München (DE); HIELSCHER, Christoph, 81549 München (DE); COLES, Christopher B., Littleton, Colorado 80127 (US)
(74) Vertreter: Weidel, Gottfried
(86) Internationale Anmeldenummer: PCT/EP2006/061080
(87) Internationale Veröffentlichungsnummer: WO 2006/103224

(56) Entgegenhaltungen:
- WO-A1-01/52532
- US-A1- 2002 083 440
- US-A1- 2002 174 433
- US-A1- 2003 208 763
- US-A1- 2004 045 020
- US-A1- 2004 078 829
- US-A1- 2004 228 605

## Beschreibung

Die vorliegende Erfindung betrifft ein Verfahren und eine Anordnung zum Speichern und Wiedergeben von TV-Sendungen. Insbesondere liefert die vorliegende Erfindung ein verbessertes Verfahren und eine verbesserte Anordnung für den Betrieb eines PVR, insbesondere eines Netzwerk-PVR.

Nachdem bandbasierte analoge Videoaufzeichnungsgeräte über Jahrzehnte hinweg für Heimanwender die einzige Möglichkeit darstellten, über Antennen-, Kabel- oder Satellitenfernsehen ausgestrahlte Sendungen aufzuzeichnen und komfortabel aufzubewahren, gibt es nach dem Verfügbarwerden schneller und gleichzeitig preiswerter Videoprozessoren und leistungsfähiger Videocodecs wie etwa MPEG2 (1994) und MPEG4 (1998) seit einigen Jahren eine Reihe von meist festplattenbasierten digitalen Geräten, die neben der reinen Videoaufzeichnung eine Reihe von Komfortfunktionen bieten.

Diese neue Gerätegeneration wird häufig als persönlicher Videorekorder (PVR), mitunter auch als digitaler Videorecorder (DVR) bezeichnet. Während diese modernen Geräte natürlich auch wie klassische Geräte zum einfachen Aufzeichnen und späteren Wiedergeben von Sendungen genutzt werden können, gehen deren Fähigkeiten darüber bei weitem hinaus. Ein häufig genutztes Merkmal eines PVR ist beispielsweise das sogenannte zeitversetzte Fernsehen (Time Shifting), bei dem der Nutzer mit dem Wiedergeben einer Sendung bereits beginnt, während die Aufzeichnung noch läuft. Dank der leistungsfähigen Hardware eines modernen PVR ist die dabei erreichte Bildqualität besser als die eines herkömmlichen VHS oder SVHS Bandgeräts.

Das zeitversetzte Fernsehen erlaubt es dem Nutzer auch, eine zunächst live angesehene Sendung zu "pausieren", etwa um einen Anruf entgegenzunehmen, und die Wiedergabe später fortzusetzen, wobei es sich für den Nutzer so darstellt, als habe er tatsächlich die Live-Ausstrahlung pausiert und später fortgesetzt. Im Hintergrund hat jedoch der Druck des Nutzers auf die "Pause"-Taste seinen PVR veranlaßt, das laufende Programm aufzuzeichnen, und der erneute Druck auf die "Pause"-Taste führt dazu, daß die aufgezeichnete Sendung einerseits weiter aufgezeichnet und andererseits bereits wiedergegeben wird.

Großer Beliebtheit erfreut sich auch die Fähigkeit eines PVR, mit minimaler Verzögerung größere Abschnitte in einer Aufzeichnung überspringen zu können. Häufig wird dies benutzt, um in der Aufzeichnung enthaltene Werbeblöcke bei der Wiedergabe zu überspringen. Um diese Fähigkeit hat sich eine Reihe von Diensten etabliert, die das Auffinden der Grenzen der Werbeblöcke erleichtern, etwa indem der Beginn und das Ende eines Werbeblocks als auf den Beginn einer Sendung bezogene Zeitpunkte als Index zur Aufzeichnung abgelegt werden und somit bei der Wiedergabe ein automatisches Überspringen der Werbung möglich wird.

Neben speziell angepaßten Unterhaltungselektronikgeräten werden zunehmend auch multimedia-fähige PCs mit geeigneter Software als PVR genutzt (bekannt als Home Theater PC, HTPC). Technisch unterscheidet sich ein spezieller PVR von einem PC-PVR kaum; beide weisen einen großen (Platten-) Speicher auf, ausreichend Prozessorleistung und geeignete Videocodecs.

Beide Plattformvarianten sind durch konfigurierbare Software bzw. Firmware in der Lage, dem Nutzer weitere Funktionen zu bieten, etwa die Suche nach Sendungen, die thematisch zu seinen Lieblingssendungen passen. Beiden Plattformvarianten ist gemein, daß die Aufzeichnung lokal beim Nutzer erfolgt und die Menge aufzeichenbarer Sendungen durch den lokalen Plattenspeicher begrenzt ist. Häufig ist es deshalb möglich, aufgezeichnete Sendungen vom internen Speicher des Geräts auf beschreibbare Medien wie (wieder)beschreibbare CD oder DVD zu transferieren. Dies ist aber mit Aufwand verbunden, und nicht zuletzt ist auch der Preis eines PVR erheblich. Und auch PVR leiden unter dem Problem, daß zum parallelen Aufzeichnen mehrer Sendungen auch mehrere PVR benötigt werden. Teurere Multituner-Geräte lösen dieses Problem nur bedingt, da stets weniger Tuner als TV Stationen vorliegen werden und außerdem die - für einen Kanal ausreichend leistungsfähige - Hardware des PVR bei der parallelen Aufzeichnung mehrerer Kanäle an ihre Grenzen stößt.

Um Nutzern alle Vorteile eines PVR bieten zu können, ohne daß diese die Investition in einen PVR tätigen müssen, wurde in dem Whitepaper "Network PVR: Everything on Demand", Jay Schiller, nCube Corporation, erhältlich im Internet unter http://www.ncube.com/pressroom/downloads/nvpr-whitepaper.pdf ein Netzwerk-PVR vorgeschlagen, bei dem Speicher, Kodierlogik und Codecs durch einen Anbieter im Kabelnetz vorgehalten werden. Der Nutzer erhält ein Gerät, mit dem er Sendungen zur Speicherung auswählen und gespeicherte Sendungen abrufen kann, die dann mittels breitbandiger Verbindung in Echtzeit an den Nutzer übertragen werden. Ein solches Gerät kann im Vergleich zu einem PVR oder einem HTPC wesentlich weniger leistungsfähig sein. Gleichzeitig kann der Nutzer praktisch unbegrenzt Speicherplatz auf dem zentralen PVR-Server mieten, während der Betreiber des PVR-Servers nur eine Kopie jeder Sendung vorhalten muß, die dann bei Bedarf an jene Nutzer verteilt wird, die diese Sendung in ihrem (virtuellen) Speicher abgelegt haben.

In einer Fortbildung kann ein solcher Netzwerk-PVR so ausgestaltet sein, daß das "Programmieren" des Netzwerk-PVR durch den Nutzer entfällt und der Nutzer statt dessen auf alle Sendungen seines Programm-Bouquets etwa der letzten 4 Wochen Zugriff hat.

Die genannten Funktionen Time-Shift und schnelles Überspringen von Werbung werden von PVR Nutzern häufig manuell kombiniert, indem Nutzer eine Live-Sendung aufzeichnen, mit dem Anschauen dieser Sendung im Time-Shift-Modus später beginnen und durch Überspringen der ausgestrahlten Werbung sich sukzessive der Live-Ausstrahlung annähern. Sowohl im Falle von Standalone-PVR als auch bei Netzwerk-PVR muß ein Nutzer manuell eine Abschätzung treffen, wieviel Zeit innerhalb der Ausstrahlung einer Sendung für Werbung verbraucht wird, um den optimalen Startzeitpunkt für die Time-Shift Wiedergabe dieser Aufzeichnung ermitteln zu können. Beginnt er zu früh mit der Wiedergabe, wird seine Sendung jedenfalls zum Ende hin von Werbung unterbrochen sein. Beginnt er zu spät, kann er zwar eine werbefreie Sendung genießen, müßte jedoch länger als notwendig warten.

US 2003/208763 A1 offenbart, dass in einem Breitbandkommunikationssystem, z.B. einem Kabelsystem, ein Programminhalt einfach reserviert und zum Ansehen unter Verwendung interaktiver Programmführer vorgesehen sein kann. Ein solcher Programminhalt mag laufende Programme, zukünftige Programme und bereits ausgestrahlte Programme, welche in einem Headend in dem Kabelsystem vorgehalten werden, umfassen, die überlappende Sendezeiten aufweisen können oder auch nicht. Zusätzlich mag ein Nutzer Programme an einer Settop-Box reservieren und mag dies auch entfernt von dem Endgerät durch ein Kommunikationsnetzwerk wie das Internet, ein öffentliches Telefonschaltnetzwert (PTSN), ein drahtloses Telefonnetzwerk usw. durchführen.

US 2004/078829 A1 betrifft eine ortsfeste Anwendung und eine zweite Anwendung, welche in einer Settop-Box vorhanden sind, um einen TV-Rundfunk-Service bzw. einen Netzwerk-PVR (NPVR) - Service zu empfangen. Die ortsfeste Anwendung wird zugunsten der zweiten Anwendung suspendiert, wenn ein Nutzer von einem Rundfunkkanal zu einem Netzwerk-PVR-fähigen Kanal wechselt, und umgekehrt. In einer Ausgestaltung, bei welcher eine Digital-Videorekorder (DVR)-Settop-Box verwendet wird, stellt ein DVR-Server Trickfunktionen (Pause, Rücklauf und Vorlauf) bereit, bevor eine NPVP-Sitzung eingerichtet wird.

US 2002/174433 A1 betrifft Systeme und Verfahren zum Bereitstellen eines interaktiven TV-Systems zum Aufnehmen von TV-Programmen. Das interaktive TV-System mag Komponenten zum Bereitstellen einer PVR-Funktionalität bereitstellen, wie einen interaktiven TV-Programmführer (IPG), PVR-Erweiterungen, PVR-Anwendungsprogrammschnittstellen, eine PVR-Vorrichtung, jede geeignete Hardware oder Software, oder eine Kombination davon.

Gemäß WO 01/52532 A1 speichert und spielt ein PVR selektiv ein Broadcast-Programm, dessen Szenen markiert sind mit Inhaltskennzahlen. Der Recorder nutzt Nutzerpräferenzen. Wenn ein Programm ausgestrahlt und auf einer Festplatte in komprimierter Form gespeichert wird, wird simultan eine zugeordnete Datei erzeugt und gespeichert, welche charakterisiert ist durch individuelle Szenen mit den entsprechenden Inhaltskennzahlen. Die Datei umfasst Daten, aus denen die Start- und Endpunkte individueller Szenen bestimmt werden können. Nutzerpräferenzen und die zuvor erzeugte Datei helfen während des Spielens eines gespeicherten Programms, Szenen zu bestimmen, welche übersprungen werden sollten. Für nahtloses Spielen wird der Beginn des Anschauens hinreichend verzögert.

US 2004/0045020 A1 beschreibt ein System zur Identifikation von Werbung in einem Video durch Analyse des Inhalts von Daten, welche das Zuschauerverhalten hinsichtlich schnellem Vorlauf und Vorwärtsspringen repräsentieren.

US 2002/0083440 A1 beschreibt ein system und ein Verfahren, welche Werbernacerial aus einer Videoquelle extrahieren, wobei das extrahierte Material in einer strukturierten Datenbasis für verschiedene Anwendungen gespeichert wird. Das System kann umfassen Mittel zur Konvertierung des Videosignals in ein digitales Format, Mittel zum Speichern des Videosignals in einer Datenbasis, Mittel zum Absuchen des Videosignals nach Anwesenheit vordefinierter Eigenschaften und Mittel zur Zuordnung solcher Eigenschaften zu dem Anfang und dem Ende eines jeden solchen Segmentes.

Es ist daher eine Aufgabe der Erfindung, ein Verfahren und eine Anordnung zum Speichern und Wiedergeben von TV-Sendungen anzugeben, die das automatische Auffinden des optimalen Startzeitpunkts der Time-Shift Wiedergabe aufgezeichneter TV-Sendungen ermöglicht.

Diese Aufgabe wird gelöst durch eine Anordnung zum Speichern und Wiedergeben von TV-Sendungen, welche folgendes aufweist:
- Mittel zum Auswählen einer aufzuzeichnenden TV-Sendung;
- Mittel zum Aufzeichnen der TV-Sendung;
- Mittel zum zeitversetzten Wiedergeben einer laufenden Aufzeichnung der aufzuzeichnenden TV-Sendung;
- Mittel zum Ermitteln des Zeitpunkts des Beginns der Ausstrahlung der aufzuzeichnenden TV-Sendung;
- Mittel zum Ermitteln der Gesamtzeitdauer der während der Ausstrahlung innerhalb der TV-Sendung eingeblendeten Werbung;
- Mittel zum Ermitteln eines Zeitpunkts für den frühesten Beginn einer werbefreien Wiedergabe aus Zeitpunkt des Beginns der Ausstrahlung und Gesamtzeitdauer der eingeblendeten Werbung; und
- Mittel zum Anzeigen des Zeitpunkts für den frühesten Beginn einer werbefreien Wiedergabe.

Die Erfindung betrifft ferner ein Verfahren zum Speichern und Wiedergeben von TV-Sendungen, mit folgenden Schritten:
- Auswählen einer aufzuzeichnenden TV-Sendung;
- Aufzeichnen der TV-Sendung, wobei eine laufende Aufzeichnung zeitversetzt wiedergebbar ist;
- Ermitteln des Zeitpunkts des Beginns der Ausstrahlung der aufzuzeichnenden TV-Sendung;
- automatisches Ermitteln der Gesamtzeitdauer der während der Ausstrahlung innerhalb der TV-Sendung eingeblendeten Werbung;
- Ermitteln eines Zeitpunkts für den frühesten Beginn einer werbefreien Wiedergabe aus Zeitpunkt des Beginns der Ausstrahlung und Gesamtzeitdauer der eingeblendeten Werbung; und
- Anzeigen des Zeitpunkts für den frühesten Beginn einer werbefreien Wiedergabe.

Vorteilhaft wird durch die Erfindung der optimale Startzeitpunkt (entspricht dem Zeitpunkt für den frühestmöglichen Beginn einer werbefreien Wiedergabe) für die werbefreie Wiedergabe einer mittels Time-Shift aufgezeichneten TV-Sendung ermittelt und einem Nutzer der erfindungsgemäßen Anordnung angezeigt. In einer Ausgestaltung wird dieser Startzeitpunkt im elektronischen Programmführer bzw. EPG (EPG = Electronic Program Guide) anstelle des dort überlicherweise angezeigten Startzeitpunkts der Ausstrahlung der Sendung oder im Zusammenhang mit diesem angezeigt.

Der optimale Startzeitpunkt kann ermittelt werden, indem zunächst der Zeitpunkt des Beginns der Ausstrahlung der aufzuzeichnenden TV-Sendung ermittelt wird. Dieser Zeitpunkt kann beispielsweise ermittelt werden, indem Nutzereingaben bezüglich einer aufzuzeichnenden Sendung ausgewertet werden oder indem elektronisch verfügbare Programminformationen ausgewertet werden, etwa solche des EPG. Die Gesamtdauer der für diese Ausstrahlung vorgesehenen Werbeunterbrechungen kann beispielsweise ermittelt werden, indem:
- die gesetzlich oder durch andere Regulatoren, etwa eine freiwillige Selbstkontrolle der Fernsehanstalten, festgelegte maximale Werbezeiten über die Dauer der Ausstrahlung summiert werden;
- ein Nutzer für jeden Kanal manuell die maximale Länge der Werbeunterbrechungen pro Zeiteinheit, ggf. gestaffelt nach Stunde des Programmstarts, festlegt; oder
- indem in elektronischen Verzeichnissen verfügbare Informationen hinsichtlich Dauer der Ausstrahlung und Dauer des tatsächlichen Inhalts ausgewertet werden.

Die genannten Informationen hinsichtlich der Werbezeiten können in einer oder mehreren Tabellen hinterlegt werden. Diese Tabellen können, falls erforderlich, so gestaltet sein, daß für jeden TV-Kanal gesondert Einträge vorhanden sind, etwa für die Zahl der Werbeminuten pro Stunde in Abhängigkeit von der Tageszeit.

Die vorliegende Erfindung ist im Zusammenhang mit Standalone PVR-Lösungen, z.B. einem herkömmlichen PVR oder einem HTPC, einsetzbar. Die erfindungsgemäße Anordnung bildet in diesen Fällen vorzugsweise das Standalone-Gerät, beispielsweise also den PVR oder HTPC. Alternativ kann die vorliegende Erfindung auch im Zusammenhang mit einem Netzwerk-PVR mit verteilter Architektur umfassend einen PVR-Server und ein oder mehrere Endgeräte vorteilhaft eingesetzt werden.

Im folgenden werden bevorzugte Ausführungsbeispiele der vorliegenden Erfindung im Zusammenhang mit einer Zeichnung näher erläutert.

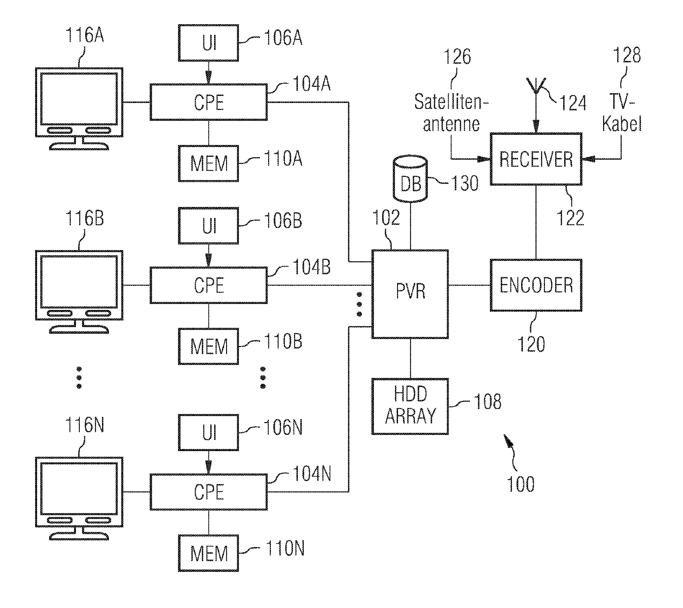

Die einzige Figur zeigt eine Anordnung 100 mit einem Netzwerk-PVR bzw. PVR Server 102 und von diesem versorgten Endgeräten 104A..104N. Der PVR Server 102 empfängt von einem Encoder 120 digital kodierte TV-Kanäle. Der Encoder wiederum empfängt die TV-Kanäle von einem Receiver 122, welcher über terrestrische Antenne 124 und/oder Satellitenantenne 126 und/oder TV-Kabel 128 geeignete TV-Signale empfängt. Der Encoder 120 und der Receiver 122 können dabei als ein Gerät konstruiert sein. Der Encoder 120 nutzt einen Codec wie etwa MPEG2 oder MPEG4 oder davon abgeleitete Codecs, um die zunächst in analoger Form vorliegenden TV-Signale in ein effizientes digitales Datenformat zu überführen. Liegt ein TV-Kanal bereits als digitaler Datenstrom vor, beispielsweise als Digital Video Broadcast DVB (terrestrisch als DVB-T, via Kabel als DVB-C oder via Satellit als DVB-S empfangen), kann der Encoder 120 diesen Datenstrom unmodifiziert an den PVR Server 102 weiterleiten oder vor Weiterleitung modifizieren, beispielsweise durch Anpassen der Bandbreite des Datenstroms an die Bandbreite der Verbindung zu den Endgeräten 104.

Der PVR Server 102 ist mit einem Massenspeicher 108 gekoppelt, beispielsweise mit einem Festplatten-Array bzw. HDD Array. In der Technik sind zahlreiche Methoden bekannt, aus Festplatten redundante Massenspeicher-Arrays aufzubauen, die beim Ausfall einzelner Festplatten dennoch die gespeicherten Daten vollständig ausliefern können. Der Einsatz eines solchen redundanten Arrays, z.B. eines redundanten Arrays aus unabhängigen Festplatten (RAID), ist im Zusammenhang mit der vorliegenden Erfindung von Vorteil, da ein PVR Server 102 und der angeschlossene Massenspeicher 108 sämtliche oder zumindest einen großen Anteil an den Daten der TV-Aufzeichnungen zahlreicher Nutzer speichert.

Die Nutzer-Endgeräte 104 sind mit dem PVR Server 102 beispielsweise über das TV-Kabelnetz oder über eine DSL-Verbindung verbunden. Moderne Codecs erlauben eine akzeptable Videoqualität mit Übertragungsraten ab wenigen hundert kbit/s. Mit den technisch über DSL-Verbindungen möglichen Bandbreiten von mehreren Mbit/s sind zwei oder mehr parallele Videoströme (für verschiedene Wiedergabegeräte im Haushalt des Nutzers) oder ein einzelner Videostrom mit hoher Qualität denkbar.

Die Endgeräte 104 können mit lokalem Speicher 110 ausgestattet oder gekoppelt sein, der beispielsweise als herkömmliche Festplatte und/oder als Flash-Speicher und/oder als RAM ausgebildet sein kann. Natürlich sind auch Sonderformen wie im Flash-Speicherkartenformat vorliegende Kleinstfestplatten denkbar. Flash-Speicher hat dabei den Vorteil, daß eine Speicherung der Daten unabhängig vom Anliegen einer Versorgungs-Spannung möglich ist und gleichzeitig besonders leise Endgeräte 104 ermöglicht werden, da Flash-Speicher keine rotierenden oder andere mechanische Teile aufweist.

Der Speicher 110 kann dabei fest mit dem Endgerät 104 gekoppelt oder auswechselbar gestaltet sein. An den Speicher 110 der Endgeräte 104 bestehen geringere Anforderungen als an den Massenspeicher 108 hinsichtlich Redundanz und Ausfallsicherheit. Der Endgeräte-Speicher 110 kann dazu dienen, Nutzerpräferenzen und andere Einstellungen zu speichern, sofern diese nicht zentral durch den PVR Server 102 verwaltet werden.

Bei dem Endgerät bzw. CPE 104 kann es sich um eine Set-Top-Box handeln, die an ein Bildwiedergabegerät 116 angeschlossen wird. Alternativ kann das Endgerät 104 in das Bildwiedergabegerät 116 integriert sein. Das Bildwiedergabegerät 116 kann ein herkömmlicher Fernseher sein. Alternativ kann es sich um einen Monitor handeln, der selbst keinen TV-Tuner aufweist. Das Endgerät 104 weist eine Benutzerschnittstelle 106 auf, die dem Nutzer beispielsweise dazu dient, sein Archiv aufgezeichneter TV-Sendungen, ggf. sein persönliches TV-Programm und andere persönliche Einstellungen zu verwalten. Diese Benutzerschnittstelle kann, wie auf dem Gebiet der Set-Top-Boxen üblich, so realisiert sein, daß der Nutzer Eingaben über eine Fernbedienung macht und Ausgaben über das Bildwiedergabegerät 116 angezeigt bekommt.

Die Eingaben eines Nutzers betreffend die Aufzeichnung von TV-Sendungen werden an den PVR Server 102 gesendet, der aus den empfangenen Daten Datensätze erzeugt, welche die aufzuzeichnende TV-Sendung(en) kennzeichnen. Mittels eines Schedulers wird die entsprechende TV-Sendung zur Aufnahme vorgesehen. Eine Datenbank 130, beispielsweise eine Nutzerdatenbank, verwaltet die von einem Nutzer zur Aufnahme vorgesehenen Sendungen und prüft Berechtigungen des Nutzers, etwa ob der Nutzer den entsprechenden TV-Kanal abonniert hat.

Wird eine TV-Sendung ausgestrahlt, prüft der PVR Server 102 in Zusammenwirken mit der Datenbank 130, ob ein (es genügt ein einziger) Nutzer diese Sendung zur Aufnahme vorgesehen hat. Ist dies der Fall, wird die Aufnahme vorgenommen. Dabei können die bei der Aufzeichnung anfallenden Daten vollständig im Speicher 108 des PVR Servers abgelegt werden oder in einen lokalen und einen zentralen Teil aufgeteilt und entsprechend im Speicher 110 des Endgeräts 104 oder im Massenspeicher 108 abgelegt werden. Falls an mehreren Endgeräten 104 die Sendung zur Aufnahme programmiert wurde, kann entweder eine gemeinsame Kopie vorgesehen werden, die vollständig bzw. deren zentraler Anteil im Speicher 108 des PVR Servers 102 abgelegt wird, oder für jedes Endgerät wird eine gesonderte Kopie erstellt. In der ersten Datenbank 130 wird anschließend für jedes Endgerät, welches die Sendung zur Aufzeichnung vorgesehen hatte, eine Adressierungsinformation auf die gemeinsame oder die separate Kopie hinterlegt, etwa ein Dateiname oder sonstige Indexinformationen. Ein solcher nutzerbezogener Eintrag kann in Form von Metadaten weitere Informationen zur Sendung enthalten, etwa ein Verfallsdatum oder die Positionen etwaiger Werbeblöcke.

Falls eine Aufteilung in zentrale und lokale Aufzeichnungsdaten erfolgt, werden die lokalen Daten entsprechend an alle Endgeräte 104 gesendet, an welchen die Sendung in das persönliche TV-Programm aufgenommen werden soll. Das Aufteilen der Daten kann dabei so erfolgen, daß zumindest der zentrale Datenstrom für sich genommen kein dekodierbares Videosignal (Bild und Ton) mehr liefert. Erst wenn beide Datenmengen (aus dem Speicher 110 eines Endgeräts 104 und dem Massenspeicher 108) kombiniert werden, kann die Sendung vollständig wiedergegeben werden.

Eine Wiedergabe erfolgt, indem ein Nutzer mittels Nutzerschnittstelle 106 am Endgerät 104 das Archiv verfügbarer Sendungen anfordert, welches von der Datenbank 130 an das Endgerät 104 zur Darstellung mittels der Nutzerschnittstelle, beispielsweise auf dem Bildschirm 116, gesendet wird. Aus dem Archiv kann der Nutzer eine Aufzeichnung auswählen und durch entsprechende Eingabe die Wiedergabe starten. Das Endgerät sendet diese Anforderung an den PVR Server 102, welcher mittels der Datenbank 130 die entsprechenden Video-Daten im Speicher 108 lokalisiert und diese als Video-Stream an das entsprechende Endgerät 104 sendet.

Falls eine Aufteilung in zentrale und lokale Aufzeichnungsdaten vorliegt, können die im Speicher 110 des auswählenden Endgeräts 104 und die im Massenspeicher 108 abgelegten Teile der Aufzeichnung im PVR Server 102 kombiniert werden. Hierzu werden zunächst die im Endgerät gespeicherten Daten an den PVR Server übertragen und dort kombiniert. Anschließend werden die komplettierten Videodaten zur Wiedergabe als Echtzeitdatenstrom an das Endgerät 104 gesendet.

Alternativ können die im Speicher 110 des auswählenden Endgeräts 104 und die im Massenspeicher 108 abgelegten Teile der Aufzeichnung in Echtzeit im Endgerät 104 kombiniert werden. Auf entsprechende Nutzereingabe hin werden die unvollständigen Videodaten mittels des PVR Servers 102 aus dem Massenspeicher 108 als Nahe-Echtzeitdatenstrom an das Endgerät 104 gesendet, dort um die im Endgerät 104 gespeicherten Daten ergänzt und wiedergegeben. Nahe-Echtzeitdatenstrom bedeutet dabei, daß je nach Art der gewählten Aufteilung der Daten zwischen lokalem Speicher 110 und Massenspeicher 108 sich auch größere Datenmengen im lokalen Speicher befinden können, etwa Intro-Sequenzen, die zunächst abgespielt werden, bevor die bis dahin gegebenenfalls gepufferten Daten aus dem Massenspeicher 108 zur Wiedergabe aufbereitet werden.

In einem Ausführungsbeispiel liegen im PVR Server 102 oder in der Datenbank 130 oder an einem anderen Speicherort, auf den der PVR Server 102 Zugriff hat, liegen Informationen vor, welcher TV-Kanal zu welcher Tageszeit wie viel Sendezeit innerhalb einer Ausstrahlung für Werbung nutzt. Diese Informationen können beispielsweise aus gesetzlichen Vorgaben oder Vorgaben anderer Regulatoren abgeleitet werden. Alternativ kann ein Betreiber des PVR Servers 102 empirisch durch seine Nutzer auftretende Werbezeiten tageszeitabhängig ermitteln lassen und beispielsweise den Mittelwert oder den Maximalwert dieser empirisch ermittelten Zeiten zur Berechnung der Werbedauer während einer Ausstrahlung nutzen.

In einem weiteren Ausführungsbeispiel werden dem PVR Server 102, beispielsweise über das Internet, Daten zum Abruf zur Verfügung gestellt betreffend die Dauer der Ausstrahlung und die Dauer des während dieser Ausstrahlung ausgestrahlten Inhalts. Insbesondere bei Spielfilmen finden sich in elektronischen Programmzeitschriften, EPG oder auch im Videotext häufig Angaben zur Länge des eigentlichen Films. Aus Start- und Endzeitpunkt der Ausstrahlung läßt sich die Dauer der Ausstrahlung ermitteln, und aus der Differenz zwischen der Dauer der Ausstrahlung und der Länge des Films läßt sich schließlich die Dauer der eingebetteten Werbung ermitteln.

Die ermittelte Dauer der Werbung kann in beiden Ausgestaltungen genutzt werden, um den Zeitpunkt für den frühesten Beginn einer werbefreien Wiedergabe zu ermitteln. Dieser Zeitpunkt kann dem Nutzer beispielsweise über die Nutzerschnittstelle 106 angezeigt werden, während der Nutzer die entsprechende TV-Sendung zur Aufnahme programmiert. Dabei kann dieser Zeitpunkt neben dem oder anstatt des Zeitpunkts angezeigt werden, zu welchem die Ausstrahlung beginnt.

Der Nutzer hat nun vorteilhafterweise die Gelegenheit, die Time-Shift Fähigkeit zu nutzen, um zum ermittelten Zeitpunkt für den frühesten Beginn einer werbefreien Wiedergabe die Wiedergabe zu beginnen und eingeblendete Werbung zu überspringen.

Das Überspringen von Werbung kann dabei mittels einer speziellen Taste auf der Fernbedienung erfolgen. Mittels dieser Taste kann beispielsweise einer der folgenden Abläufe initiiert werden:
- Der PVR Server 102 wird veranlaßt, anhand der im Zusammenhang mit der wiedergegebenen TV-Sendung gespeicherten Metadaten das Ende des aktuellen Werbeblocks zu bestimmen und die Wiedergabe ab dieser Zeitmarke fortzusetzen. ODER
- Der PVR Server 102 wird veranlaßt, eine bestimmte Zeitspanne, z.B. eine halbe Minute, in der Wiedergabe vorwärts zu springen. Diese Zeitspanne kann an der üblichen Werbespotlänge orientiert sein. Der Nutzer kann durch wiederholtes Betätigen der Taste rasch das Ende eines Werbeblocks erreichen.

Falls es aus rechtlichen Gründen, etwa wegen mangelnder Zustimmung der Betreiber der TV-Kanäle, nicht möglich ist die Informationen über den Zeitpunkt für den frühesten Beginn einer werbefreien Wiedergabe zentral durch den PVR Server zu ermitteln und in den EPG zu integrieren, kann diese Ermittlung in einer weiteren Ausgestaltung in analoger Weise auch im Endgerät 104 erfolgen. Hierfür wird ggf. eine separate Internet-Anbindung des Endgeräts 104 benötigt - nicht dargestellt. Das Überspringen der Werbung erfolgt dann wie vorstehend beschrieben, wobei ggf. die Metadaten ebenfalls im Endgerät 104 gespeichert sind und Betätigen der genannten Taste dazu führt, daß das Endgerät 104 die Fortsetzung der Wiedergabe am anhand der lokalen Metadaten ermittelten Ende eines Werbeblocks beim PVR Server 102 anfordert.

Es kann vorgesehen werden, von Nutzern, die den Dienst des Betreibers des PVR Servers 102 gemäß der vorliegenden Erfindung nutzen, ein besonderes Entgelt zu erheben, das beispielsweise in einem zusätzlichen monatlich zu entrichtenden Entgelt oder einer nutzungsabhängigen Gebühr besteht.

Während die Erfindung vorstehend unter Bezug auf die Figur für einen Netzwerk-PVR beschrieben wurde, ist es, wie weiter oben erwähnt, natürlich auch möglich, die vorliegende Erfindung im Zusammenhang mit herkömmlichen PVR oder HTPC Lösungen einzusetzen - nicht dargestellt. Die Nutzung der im Zusammenhang mit Netzwerk-PVR beschriebenen Methoden zur Ermittlung des Zeitpunkts für den frühesten Beginn einer werbefreien Wiedergabe ist anhand der vorstehenden detaillierten Beschreibung auch für Standalone-Lösungen ohne weiteres möglich.

Basis für die Nutzung eines PVR oder HTPC ist häufig ein elektronischer Programmführer bzw. EPG oder eine Software, die Programminformationen aus verschiedenen Internetangeboten oder anderen Quellen sammelt. Dem Nutzer stehen diese Informationen zur Verfügung, um eine TV-Sendung zur Aufnahme zu programmieren. Bei bestimmten, am Markt erhältlichen Endgeräten muß der Nutzer dabei ggf. angeben, daß er nicht nur die Aufnahme der Sendung, sondern auch die zeitversetzte Wiedergabe dieser Aufnahme plant.

## Patentansprüche

1. Anordnung (100) zum Speichern und Wiedergeben von TV-Sendungen, welche folgendes aufweist:
- Mittel zum Auswählen einer aufzuzeichnenden TV-Sendung;
- Mittel (102, 108) zur Aufnahme der TV-Sendung;
- Mittel (104, 102, 108) zur zeitversetzten Wiedergabe einer laufenden Aufzeichnung der aufzuzeichnenden TV-Sendung;
- Mittel zum Ermitteln des Zeitpunkts des Beginns der Ausstrahlung der aufzuzeichnenden TV-Sendung;
- Mittel zum Ermitteln der Gesamtzeitdauer der während der Ausstrahlung innerhalb der TV-Sendung eingeblendeten Werbung;
- Mittel zum Ermitteln eines Zeitpunkts für den frühesten Beginn einer werbefreien Wiedergabe aus Zeitpunkt des Beginns der Ausstrahlung und Gesamtzeitdauer der eingeblendeten Werbung;
- Mittel zum Anzeigen des Zeitpunkts für den frühesten Beginn einer werbefreien Wiedergabe;
- wobei Mittel der Anordnung zur Aufnahme und Wiedergabe als PVR Server (102) mit Mitteln zum Empfang einer Vielzahl digital kodierter TV-Kanäle, Mitteln zum Versorgen einer Vielzahl von Endgeräten (104) sowie Mitteln zum Aufzeichnen zu speichernder TV-Sendungen und als zumindest ein Endgerät (104) mit Mitteln (106) zum Auswählen zu speichernder TV-Sendungen, Mitteln zum Übertragen der Auswahl an den PVR Server (102) und Mitteln zum Wiedergeben von durch den PVR Server (102) aufgezeichneten TV-Sendungen ausgestaltet sind;
- wobei in einer Nutzerdatenbank (130) der Anordnung Informationen vorliegen, welcher TV-Kanal zu welcher Tageszeit wie viel Sendezeit innerhalb einer Ausstrahlung für Werbung nutzt und die Nutzerdatenbank (130) die von einem Nutzer zur Aufnahme vorgesehenen Sendungen verwaltet und Berechtigungen des Nutzers prüft; und
- wobei ein Maximalwert empirisch durch Nutzer tageszeitabhängig ermittelter Werbezeiten zur Berechnung der Gesamtzeitdauer der während der Ausstrahlung innerhalb der TV-Sendung eingeblendeten Werbung von der Anordnung genutzt wird.

2. Anordnung nach Anspruch 1, bei der die Mittel zum Auswählen einer aufzuzeichnenden TV-Sendung eine Nutzerschnittstelle (106) sowie einen elektronischen Programmführer umfassen, wobei die Mittel zum Anzeigen der Startzeit für den frühesten Beginn einer werbefreien Wiedergabe so ausgestaltet sind, daß ein im elektronischen Programmführer enthaltener Zeitpunkt des Beginns der Ausstrahlung der aufzuzeichnenden TV-Sendung durch den ermittelten Zeitpunkt für den frühesten Beginn einer werbefreien Wiedergabe dieser TV-Sendung ersetzt wird.

3. Anordnung nach einem der Ansprüche 1 oder 2, bei der die Mittel zum Ermitteln der Gesamtzeitdauer der während der Ausstrahlung innerhalb der TV-Sendung eingeblendeten Werbung zumindest eine Tabelle umfassen, wobei in der Tabelle für jeden TV-Kanal hinterlegt ist, wieviel Werbung pro Zeiteinheit gesendet wird und wobei die Gesamtzeitdauer der während der Ausstrahlung innerhalb der TV-Sendung eingeblendeten Werbung ermittelt wird, indem der die TV-Sendung ausstrahlende Kanal ermittelt und die Werbung pro Zeiteinheit über die Ausstrahlungsdauer der TV-Sendung summiert wird.

4. Anordnung nach Anspruch 3, bei der die Tabelle für jeden TV-Kanal gesetzliche Vorgaben für jede Stunde eines Tages aufweist, wieviel Werbeminuten pro Stunde maximal zulässig sind.

5. Anordnung nach einem der Ansprüche 1 oder 2, wobei die Gesamtzeitdauer der während der Ausstrahlung innerhalb der TV-Sendung eingeblendeten Werbung ermittelt wird, indem in elektronischen Verzeichnissen verfügbare Informationen hinsichtlich Dauer der Ausstrahlung und Dauer des tatsächlichen Inhalts ausgewertet werden.

6. Anordnung nach einem der Ansprüche 1 oder 2, wobei zumindest eine Tabelle so gestaltet ist, dass für jeden TV-Kanal gesondert Einträge vorhanden sind für eine jeweilige Zahl von Werbeminuten pro Stunde in Abhängigkeit von einer Tageszeit.

7. Anordnung nach einem der Ansprüche 1 oder 2, bei der die Mittel zum Ermitteln der Gesamtzeitdauer der während der Ausstrahlung innerhalb der TV-Sendung eingeblendeten Werbung folgendes umfassen:
- Mittel zum Ermitteln einer Dauer der Ausstrahlung der TV-Sendung;
- Mittel zum Ermitteln einer nominellen Dauer des ausgestrahlten Inhalts; und
- Mittel zum Ermitteln der Gesamtzeitdauer der eingeblendeten Werbung als die Differenz aus Dauer der Ausstrahlung und Dauer des ausgestrahlten Inhalts.

8. Anordnung nach einem der vorhergehenden Ansprüche, wobei die Nutzerdatenbank (130) prüft, ob der Nutzer einen entsprechenden TV-Kanal abonniert hat.

9. Verfahren zum Speichern und Wiedergeben von TV-Sendungen, mit folgenden Schritten:
- Auswählen einer aufzuzeichnenden TV-Sendung;
- Aufnehmen der IV-Sendung, wobei eine laufende Aufnahme zeitversetzt wiedergebbar ist;
- Ermitteln des Zeitpunkts des Beginns der Ausstrahlung der aufzuzeichnenden TV-Sendung;
- automatisches Ermitteln der Gesamtzeitdauer der während der Ausstrahlung innerhalb der TV-Sendung eingeblendeten Werbung;
- Ermitteln eines Zeitpunkts für den frühesten Beginn einer werbefreien Wiedergabe aus Zeitpunkt des Beginns der Ausstrahlung und Gesamtzeitdauer der eingeblendeten Werbung;
- Anzeigen des Zeitpunkts für den frühesten Beginn einer werbefreien Wiedergabe;
- wobei zur Aufnahme und Wiedergabe ein PVR Server (102) mit Mitteln zum Empfang einer Vielzahl digital kodierter TV-Kanäle, Mitteln zum Versorgen einer Vielzahl von Endgeräten (104) sowie Mitteln zum Aufzeichnen zu speichernder TV-Sendungen und zumindest ein Endgerät (104) mit Mitteln (106) zum Auswählen zu speichernder TV-Sendungen, Mitteln zum Übertragen der Auswahl an den PVR Server (102) und Mitteln zum Wiedergeben von durch den PVR Server (102) aufgezeichneten TV-Sendungen vorgesehen sind;
- wobei in einer Nutzerdatenbank (130) Informationen vorliegen, welcher TV-Kanal zu welcher Tageszeit wie viel Sendezeit innerhalb einer Ausstrahlung für Werbung nutzt und die Nutzerdatenbank (130) die von einem Nutzer zur Aufnahme vorgesehenen Sendungen verwaltet und Berechtigungen des Nutzers prüft; und
- wobei ein Maximalwert empirisch durch Nutzer tageszeitabhängig ermittelter Werbezeiten zur Berechnung der Gesamtzeitdauer der während der Ausstrahlung innerhalb der TV-Sendung eingeblendeten Werbung genutzt wird.

10. Verfahren nach Anspruch 9, demgemäß das Auswählen einer aufzuzeichnenden TV-Sendung mittels einer Nutzerschnittstelle (106) sowie eines elektronischen Programmführers erfolgt, wobei ein im elektronischen Programmführer enthaltener Zeitpunkte des Beginns der Ausstrahlung der aufzuzeichnenden TV-Sendung durch den ermittelten Zeitpunkt für den frühesten Beginn einer werbefreien Wiedergabe dieser TV-Sendung ersetzt wird.

11. Verfahren nach einem der Ansprüche 9 oder 10, demgemäß das Ermitteln der Gesamtzeitdauer der während der Ausstrahlung innerhalb der TV-Sendung eingeblendeten Werbung anhand zumindest einer Tabelle erfolgt, wobei in der Tabelle für jeden TV-Kanal hinterlegt ist, wieviel Werbung pro Zeiteinheit gesendet wird und wobei die Gesamtzeitdauer der während der Ausstrahlung innerhalb der TV-Sendung eingeblendeten Werbung ermittelt wird, indem der die TV-Sendung ausstrahlende Kanal ermittelt und die Werbung pro Zeiteinheit über die Ausstrahlungsdauer der TV-Sendung summiert wird.

12. Verfahren nach Anspruch 11, demgemäß die Tabelle für jeden TV-Kanal gesetzliche Vorgaben für jede Stunde eines Tages aufweist, wieviel Werbeminuten pro Stunde maximal zulässig sind.

13. Verfahren nach einem der Ansprüche 9 oder 10, demgemäß das Ermitteln der Gesamtzeitdauer der während der Ausstrahlung innerhalb der TV-Sendung eingeblendeten Werbung durch folgende Schritte erfolgt:
- Ermitteln einer Dauer der Ausstrahlung der TV-Sendung;
- Ermitteln einer nominellen Dauer des ausgestrahlten Inhalts; und
- Ermitteln der Gesamtzeitdauer der eingeblendeten Werbung als die Differenz aus Dauer der Ausstrahlung und Dauer des ausgestrahlten Inhalts.

## Claims

1. Arrangement (100) for storing and playing back TV programmes, which has the following:
- means for selecting a TV programme to be recorded;
- means (102, 108) for recording the TV programme;
- means (104, 102, 108) for time-shifted playback of a running recording of the TV programme to be recorded;
- means for ascertaining the time at which broadcast of the TV programme to be recorded begins;
- means for ascertaining the total duration of the advertising shown within the TV programme during the broadcast;
- means for ascertaining a time for the earliest beginning of advertisement-free playback from the time of the beginning of the broadcast and the total duration of the advertising shown;
- means for displaying the time for the earliest beginning of advertisement-free playback;
- wherein means of the arrangement for recording and playback are embodied as a PVR server (102) having means for receiving a multiplicity of digitally encoded TV channels, means for supplying a multiplicity of terminals (104) and means for recording TV programmes to be stored and as at least one terminal (104) having means (106) for selecting TV programmes to be stored, means for transmitting the selection to the PVR server (102) and means for playing back TV programmes recorded by the PVR server (102);
- wherein a user database (130) of the arrangement contains information regarding which TV channel uses how much transmission time within a broadcast for advertising at which time of day, and the user database (130) manages the programmes that a user intends for recording and checks authorizations of the user; and
- wherein a maximum value of advertisement times empirically ascertained by users on the basis of time of day is used by the arrangement to calculate the total duration of the advertising shown within the TV programme during the broadcast.

2. Arrangement according to Claim 1, in which the means for selecting a TV programme to be recorded comprise a user interface (106) and an electronic programme guide, wherein the means for displaying the starting time for the earliest beginning of advertisement-free playback are embodied such that a time that the electronic programme guide contains for the beginning of broadcast of the TV programme to be recorded is replaced by the ascertained time for the earliest beginning of advertisement-free playback of this TV programme.

3. Arrangement according to either of Claims 1 and 2, in which the means for ascertaining the total duration of the advertising shown within the TV programme during the broadcast comprise at least one table, wherein the table stores, for each TV channel, how much advertising is transmitted per time unit and wherein the total duration of the advertising shown within the TV programme during the broadcast is ascertained by ascertaining the channel broadcasting the TV programme and adding up the advertising per time unit over the duration of broadcast of the TV programme.

4. Arrangement according to Claim 3, in which the table has, for each TV channel, legal requirements for each hour of a day regarding the maximum permissible number of minutes of advertisement per hour.

5. Arrangement according to either of Claims 1 and 2, wherein the total duration of the advertising shown within the TV programme during the broadcast is ascertained by evaluating information, which is available in electronic directories, concerning the duration of the broadcast and the duration of the actual content.

6. Arrangement according to either of Claims 1 and 2, wherein at least one table is in a form such that each TV channel has separate entries for a respective number of minutes of advertisement per hour on the basis of a time of day.

7. Arrangement according to either of Claims 1 and 2, in which the means for ascertaining the total duration of the advertising shown within the TV programme during the broadcast comprise the following:
- means for ascertaining a duration of the broadcast of the TV programme;
- means for ascertaining a nominal duration of the broadcast content; and
- means for ascertaining the total duration of the advertising shown as the difference between the duration of the broadcast and the duration of the broadcast content.

8. Arrangement according to one of the preceding claims, wherein the user database (130) checks whether the user has subscribed to a relevant TV channel.

9. Method for storing and playing back TV programmes, having the following steps:
- selection of a TV programme to be recorded;
- recording of the TV programme, wherein a running recording can be played back in a time-shifted manner;
- ascertainment of the time at which broadcast of the TV programme to be recorded begins;
- automatic ascertainment of the total duration of the advertising shown within the TV programme during the broadcast;
- ascertainment of a time for the earliest beginning of advertisement-free playback from the time of the beginning of the broadcast and the total duration of the advertising shown;
- display of the time for the earliest beginning of advertisement-free playback;
- wherein for the purpose of recording and playback a PVR server (102) having means for receiving a multiplicity of digitally encoded TV channels, means for supplying a multiplicity of terminals (104) and means for recording TV programmes to be stored and at least one terminal (104) having means (106) for selecting TV programmes to be stored, means for transmitting the selection to the PVR server (102) and means for playing back TV programmes recorded by the PVR server (102) are provided;
- wherein a user database (130) contains information regarding which TV channel uses how much transmission time within a broadcast for advertising at which time of day, and the user database (130) manages the programmes that a user intends for recording and checks authorizations of the user; and
- wherein a maximum value of advertisement times empirically ascertained by users on the basis of time of day is used to calculate the total duration of the advertising shown within the TV programme during the broadcast.

10. Method according to Claim 9, according to which a TV programme to be recorded is selected by means of a user interface (106) and an electronic programme guide, wherein a time that the electronic programme guide contains for the beginning of the broadcast of the TV programme to be recorded is replaced by the ascertained time for the earliest beginning of advertisement-free playback of this TV programme.

11. Method according to either of Claims 9 and 10, according to which the total duration of the advertising shown within the TV programme during the broadcast is ascertained using at least one table, wherein the table stores, for each TV channel, how much advertising is transmitted per time unit and wherein the total duration of the advertising shown within the TV programme during the broadcast is ascertained by ascertaining the channel broadcasting the TV programme and adding up the advertising per time unit over the duration of broadcast of the TV programme.

12. Method according to Claim 11, according to which the table has, for each TV channel, legal requirements for each hour of a day regarding the maximum permissible number of minutes of advertisement per hour.

13. Method according to either of Claims 9 and 10, according to which the total duration of the advertising shown within the TV programme during the broadcast is ascertained by the following steps:
- ascertainment of a duration of the broadcast of the TV programme;
- ascertainment of a nominal duration of the broadcast content; and
- ascertainment of the total duration of the advertising shown as the difference between the duration of the broadcast and the duration of the broadcast content.

## Revendications

1. Dispositif (100) pour enregistrer et reproduire des émissions de télévision, comportant :
- des moyens pour sélectionner une émission de télévision à enregistrer ;
- des moyens (102, 108) pour enregistrer l'émission de télévision ;
- des moyens (104, 102, 108) pour reproduire en différé un enregistrement en cours de l'émission de télévision à enregistrer ;
- des moyens pour déterminer l'instant du début de la diffusion de l'émission de télévision à enregistrer ;
- des moyens pour déterminer la durée totale de la publicité intégrée à l'émission de télévision pendant la diffusion ;
- des moyens pour déterminer un instant pour le début le plus précoce d'une reproduction sans publicité à partir de l'instant du début de la diffusion et de la durée totale de la publicité intégrée ;
- des moyens pour afficher l'instant pour le début le plus précoce d'une reproduction sans publicité ;
- des moyens du dispositif d'enregistrement et de reproduction étant réalisés sous la forme d'un serveur PVR (102) comportant des moyens de réception d'une pluralité de canaux de télévision codés numériquement, des moyens pour desservir une pluralité de terminaux (104) et des moyens pour enregistrer des émissions de télévision à mettre en mémoire et sous la forme d'au moins un terminal (104) comportant des moyens (106) pour sélectionner des émissions de télévision à mettre en mémoire, des moyens de transmission de la sélection au serveur PVR (102) et des moyens de reproduction d'émissions de télévision enregistrées par le serveur PVR (102) ;
- une base de données d'utilisateurs (130) du dispositif contenant des informations indiquant quel canal de télévision utilise, à quel instant de la journée, combien de temps d'émission pour la publicité dans les limites d'une diffusion et la base de données d'utilisateurs (130) gérant les émissions prévues par un utilisateur pour être enregistrées et contrôlant des autorisations de l'utilisateur ; et
- une valeur maximale de temps de publicité déterminés empiriquement par des utilisateurs en fonction de l'instant de la journée étant utilisée par le dispositif pour calculer la durée totale de la publicité intégrée à l'émission de télévision pendant la diffusion.

2. Dispositif selon la revendication 1, dans lequel les moyens de sélection d'une émission de télévision à enregistrer comprennent une interface utilisateurs (106) ainsi qu'un guide de programmes électronique, les moyens d'affichage de l'instant de départ pour le début le plus précoce d'une reproduction sans publicité étant conçus de manière telle qu'un instant du début de la diffusion de l'émission de télévision à enregistrer contenu dans le guide de programmes électronique est remplacé par l'instant déterminé pour le début le plus précoce d'une reproduction sans publicité de cette émission de télévision.

3. Dispositif selon l'une des revendications 1 ou 2, dans lequel les moyens de détermination de la durée totale de la publicité intégrée à l'émission de télévision pendant la diffusion comprennent au moins un tableau, dans ce tableau étant consignée, pour chaque canal de télévision, l'information indiquant combien de publicité est émise par unité de temps, et la durée totale de la publicité intégrée à l'émission de télévision pendant la diffusion étant déterminée par détermination du canal diffusant l'émission de télévision et totalisation de la publicité par unité de temps pour la durée de la diffusion de l'émission de télévision.

4. Dispositif selon la revendication 3, dans lequel le tableau comporte, pour chaque canal de télévision, des spécifications légales pour chaque heure d'une journée indiquant combien de minutes de publicité par heure sont autorisées au maximum.

5. Dispositif selon l'une des revendications 1 ou 2, la durée totale de la publicité intégrée à l'émission de télévision pendant la diffusion étant déterminée par évaluation d'informations disponibles dans des listes électroniques et relatives à la durée de la diffusion et à la durée du contenu effectif.

6. Dispositif selon l'une des revendications 1 ou 2, au moins un tableau se présentant sous une forme telle qu'il contient, pour chaque canal de télévision, des entrées séparées pour un nombre respectif de minutes de publicité par heure en fonction d'un instant de la journée.

7. Dispositif selon l'une des revendications 1 ou 2, dans lequel les moyens de détermination de la durée totale de la publicité intégrée à l'émission de télévision pendant la diffusion comprennent :
- des moyens pour déterminer une durée de la diffusion de l'émission de télévision ;
- des moyens pour déterminer une durée nominale du contenu diffusé ; et
- des moyens pour déterminer la durée totale de la publicité intégrée comme étant la différence entre la durée de la diffusion et la durée du contenu diffusé.

8. Dispositif selon l'une des revendications précédentes, la base de données d'utilisateurs (130) vérifiant si l'utilisateur s'est abonné à un canal de télévision correspondant.

9. Procédé de mise en mémoire et de reproduction d'émissions de télévision, comportant les étapes suivantes :
- sélection d'une émission de télévision à enregistrer ;
- enregistrement de l'émission de télévision, un enregistrement en cours pouvant être reproduit en différé ;
- détermination de l'instant du début de la diffusion de l'émission de télévision à enregistrer ;
- détermination automatique de la durée totale de la publicité intégrée à l'émission de télévision pendant la diffusion ;
- détermination d'un instant pour le début le plus précoce d'une reproduction sans publicité à partir de l'instant du début de la diffusion et de la durée totale de la publicité intégrée ;
- affichage de l'instant du début le plus précoce d'une reproduction sans publicité ;
- aux fins de l'enregistrement et de la reproduction étant prévus un serveur PVR (102) avec des moyens de réception d'une pluralité de canaux de télévision codés numériquement, des moyens pour desservir une pluralité de terminaux (104) et des moyens pour enregistrer des émissions de télévision à mettre en mémoire, et au moins un terminal (104) comportant des moyens (106) pour sélectionner des émissions de télévision à mettre en mémoire, des moyens de transmission de la sélection au serveur PVR (102) et des moyens de reproduction d'émissions de télévision enregistrées par le serveur PVR (102) ;
- une base de données d'utilisateurs (130) contenant des informations indiquant quel canal de télévision utilise, à quel instant de la journée, combien de temps d'émission pour la publicité dans les limites d'une diffusion, et la base de données d'utilisateurs (130) gérant les émissions prévues par un utilisateur pour être enregistrées et contrôlant des autorisations de l'utilisateur ; et
- une valeur maximale de temps de publicité déterminés empiriquement par des utilisateurs en fonction de l'instant de la journée étant utilisée pour calculer la durée totale de la publicité intégrée à l'émission de télévision pendant la diffusion.

10. Procédé selon la revendication 9, selon lequel la sélection d'une émission de télévision à enregistrer est effectuée au moyen d'une interface utilisateurs (106) ainsi que d'un guide de programmes électronique, un instant du début de la diffusion de l'émission de télévision à enregistrer contenu dans le guide de programmes électronique étant remplacé par l'instant déterminé du début le plus précoce d'une reproduction sans publicité de cette émission de télévision.

11. Procédé selon l'une des revendications 9 ou 10, selon lequel la détermination de la durée totale de la publicité intégrée à l'émission de télévision pendant la diffusion s'effectue à l'aide d'au moins un tableau, dans ce tableau étant consignée, pour chaque canal de télévision, l'information indiquant combien de publicité est émise par unité de temps, et la durée totale de la publicité intégrée à l'émission de télévision pendant la diffusion étant déterminée par détermination du canal diffusant l'émission de télévision et totalisation de la publicité par unité de temps pour la durée de la diffusion de l'émission de télévision.

12. Procédé selon la revendication 11, selon lequel le tableau comporte, pour chaque canal de télévision, des spécifications légales pour chaque heure d'une journée indiquant combien de minutes de publicité par heure sont autorisées au maximum.

13. Procédé selon l'une des revendications 9 ou 10, selon lequel la détermination de la durée totale de la publicité intégrée à l'émission de télévision pendant la diffusion s'effectue par les étapes suivantes :
- détermination d'une durée de la diffusion de l'émission de télévision ;
- détermination d'une durée nominale du contenu diffusé ; et
- détermination de la durée totale de la publicité intégrée comme étant la différence entre la durée de la diffusion et la durée du contenu diffusé.
